# EUROPEAN PATENT SPECIFICATION

(11) **EP 3 277 400 B1**
(45) Date of publication and mention of the grant of the patent: **30.09.2020**
(21) Application number: 16722333.8
(22) Date of filing: 04.04.2016
(51) Int. Cl.: B01D 45/08, B01D 53/26

(54) **APPARATUS FOR THE TREATMENT OF COMPRESSED GAS COMPRISING AN INSERT**
VORRICHTUNG ZUR BEHANDLUNG VON DRUCKGAS MIT EINEM EINSATZ
APPAREIL DE TRAITEMENT DE GAZ COMPRIMÉ AVEC INSERT

(30) Priority: 02.04.2015 GB 201505807
(43) Date of publication of application: 07.02.2018
(73) Proprietor: Norgren Limited, Lichfield, Staffordshire WS13 8SY (GB)
(72) Inventor: COLIN, Billiet, Lichfield Staffordshire WS13 8SY (GB); JOHN, Pearson, Lichfield Staffordshire WS13 8SY (GB)
(74) Representative: Range, Christopher William
(86) International application number: PCT/GB2016/050958
(87) International publication number: WO 2016/156887

(56) References cited:
- EP-A1- 1 737 558
- DE-A1-102004 022 312
- US-A1- 2002 095 948
- US-B1- 7 303 673

## Description

The present invention relates to an apparatus comprising an insert for the treatment of compressed gas. It relates particularly, but not exclusively, to an apparatus used in the drying of compressed air.

Compressed air is widely used throughout industry as a safe and reliable source of energy. However, the quality of the compressed air delivered directly from the compressor is unsuitable for most uses without treatment to improve its purity. In particular, water, both as vapour and condensed droplets, must be removed from the compressed air to ensure that there is no liquid water which may interfere with the operation of downstream equipment. US 2002/095948 discloses a suction accumulator for an air conditioning system.

In many situations where compressed air is used, space is at a premium and it is desirable that the compressed air drying apparatus is as small as possible and is able to operate in a horizontal alignment. An example of such a system is disclosed in our earlier application published under the number WO/2014/106740 where the apparatus is used in railway vehicles.

In such apparatus where hollow tubes of desiccant material are used to absorb water, it is important that the flow of compressed air is substantially uniformly distributed across each of the tubes. It may also be desirable that the inlet and outlet are aligned coaxially with the tubular body of the dryer. In such an example, the air comes from a compressor through an inlet tube which has a cross-section which is significantly smaller than the cross-section of the housing containing the tubes of adsorbent material. There is therefore a tendency for a greater proportion of the compressed air to pass through the adsorbent tubes at the centre of the bundle with less air passing through those on the outer edges. A standard practice in order to create a uniform distribution of the air moving from an inlet with small cross-section to a housing with a large cross-section is to provide a conical diffuser. In order for the diffuser to operate effectively it has to be sufficiently long and this is typically at least 1 to 1.5 times the diameter of the housing. This significantly increases the length of the housing and is undesirable where space is at a premium.

The air coming from the compressor is generally very hot and saturated with water vapour. It is therefore passed through an after cooler to reduce its temperature. However, this after cooler whilst cooling the air results in the condensation of water droplets from the saturated water vapour. It is generally necessary to remove these water droplets before the compressed air comes into contact with the desiccant material and this is normally achieved by using an externally mounted filter between the after cooler and the drying apparatus. Where space is at a premium the additional volume consumed by a filter is undesirable. Furthermore, filter devices often include additional mechanical components such as drainage valves which require additional maintenance and in the event of a malfunction can result in liquid water passing from the filter and causing damage to the drying apparatus.

Preferred embodiments of the present invention seek to overcome the above described disadvantages of the prior art.

According to the present invention there is provided an apparatus for use in the treatment of compressed gas, the apparatus comprising:-
a housing having at least one inlet for allowing a stream of compressed gas into the housing and at least one outlet for allowing said stream of gas to exit said housing;
at least one drain for collecting and exhausting at least one liquid component contained within said compressed gas;
at least one adsorbent material located in said housing between said inlet and said outlet for absorbing at least one component of said stream of compressed gas; and
at least one insert, the insert located within said housing between said inlet and said adsorbent material, the insert comprising:-
   a baffle for interrupting the flow of a stream of compressed air passing from an inlet in the housing of the apparatus for the treatment of compressed gas and causing the stream of compressed gas to change direction; and
   a plurality of supports extending from said baffle to adjacent an internal surface of the housing of the apparatus, at least one support including a channel to allow liquid deposited in said baffle from said stream of gas to flow towards said internal surface, wherein the baffle is concave on a surface facing the inlet of the apparatus.

By providing an insert in a gas treatment apparatus with the insert including a baffle and supports with liquid drainage channels, a number of connected advantages are provided.

Firstly, the baffle acts to disrupt the flow of compressed gas resulting in the even distribution of the compressed gas across the cross-section of the housing as it enters the desiccant material. This is achieved in a component that is significantly shorter than the conical diffuser of the prior art thereby saving significant space. The baffle also acts to catch water droplets preventing the majority of them from contacting the desiccant material. The channels in the supports allows this collected water to drain under the force of gravity towards the housing of the apparatus and then on to a collecting drain. The collecting drain is emptied periodically during the purge cycle of the drying apparatus and by using this drain to exhaust the liquid water, the need for a separate drain from a separate filter is removed. This not only reduces the size of the apparatus by removing the external filter but also improves the reliability of the apparatus by removing a drain valve as well as reducing production costs. Furthermore, the pressure loss across such a simple water separator is negligible and much less than a separate filter thereby increasing the energy efficiency of the apparatus and decreasing running costs.

By providing the baffle with a concave surface which faces the inlet of the drying apparatus, the advantage is provided that the concave surface acts to gather the small droplets of water together until a sufficiently large droplet has been formed that, under the force of gravity, moves downwards towards and then into the channel of the support. The concave shape also prevents droplets from running over the edge of the baffle, instead of down the channels of the supports, thereby preventing the droplets from leaving the baffle and entering the desiccant material.

The insert may further comprise at least one ring member and a plurality of said supports extend from said baffle to said ring.

The ring acts to provide rigidity to the supports. The insert may comprise six said supports.

By using six supports the advantage is provided that the orientation in which the insert is located within the housing of the apparatus does not matter as there will always be at least one of the channels pointing in a substantially downwards direction along which the droplets of water can pass towards the internal surface of the housing and into the drain.

In a preferred embodiment said housing is tubular and in use the housing is arranged such that the longitudinal axis of said housing is horizontal.

Preferred embodiments of the present invention will now be described, by way of example only, and not and in any limitative sense with reference to the accompanying drawings in which:-
Figure 1 is a sectional view of an apparatus of the present invention;
Figures 2 and 3 are perspective views of the apparatus of figure 1 shown from either end;
Figure 4 is a top view of an insert component of the present invention as used in the apparatus of figure 1;
Figure 5 is a side view of the insert of figure 4;
Figure 6 is a bottom view of the insert of figure 4; and
Figures 7 and 8 are perspective views of the insert of figure 4 shown from above and below.

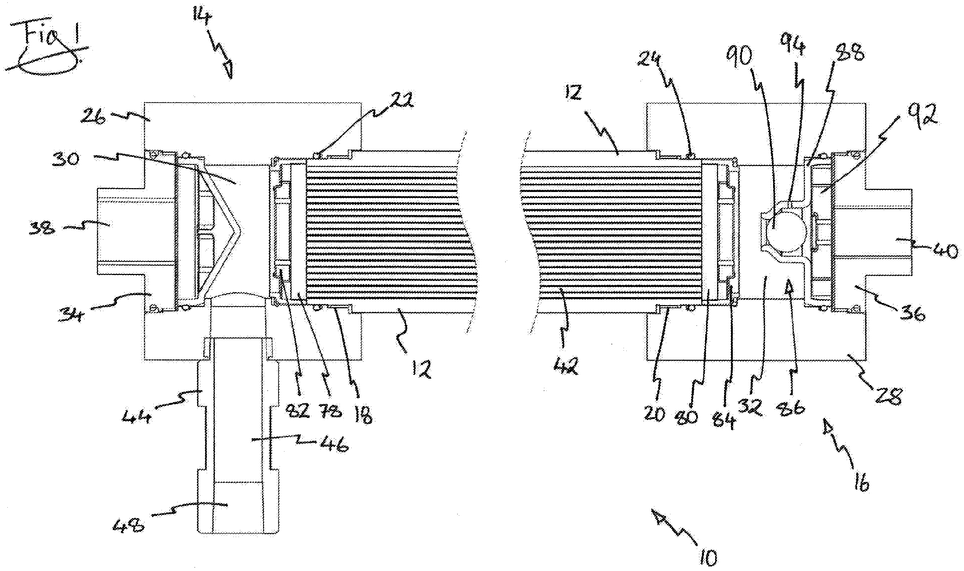

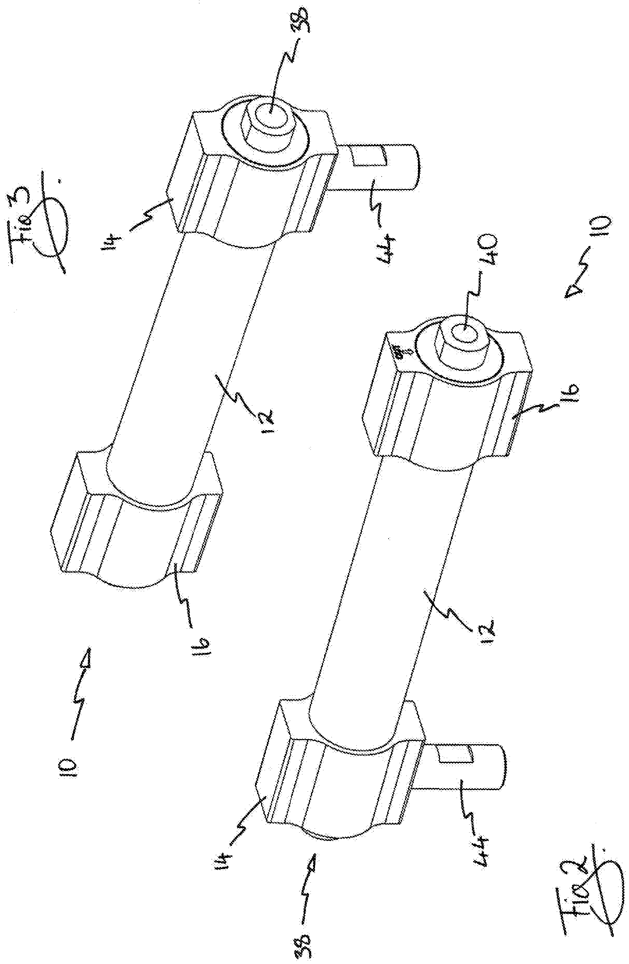

Referring to figures 1 to 4, an apparatus 10 for use in the treatment of compressed gas includes a housing formed from a tubular housing body 12 and end caps 14 and 16. The tubular housing body 12 and end caps 14 and 16 are provided with mutually engaging threads, indicated at 18 and 20, and these junctions are sealed with O-ring seals 22 and 24. Each of the end caps 14 and 16 is formed from an extruded end cap body 26 and 28 having an aperture 30 and 32 extending therethrough into which the internal thread, indicated at 18 and 20, is cut. The end caps 14 and 16 are closed with end closures 34 and 36 into which an inlet 38 and an outlet 40 are formed. The inlet 38 allows a stream of compressed gas, typically compressed air, to enter the apparatus. The compressed air passes through the end cap 14 into the tubular housing body 12 and on into the other end cap 16. From here the stream of compressed air exits through outlet 40.

The tubular housing body 12 contains an adsorbent material, in the form of a desiccant material 42. This desiccant material 42 is formed in tubes using a polymer binder. Details of the form and production techniques for this tubular desiccant material can be found in our earlier application US8669200.

The internal bores of the tubular desiccant material 42 extend coaxially with the housing body 12 resulting in the compressed air passing up the bores of the tubular desiccant material and being dried as it does so before exiting through the outlet 40. Water vapour is adsorbed onto the desiccant material during a drying cycle and is removed from the desiccant material during a purge cycle, these cycles being well known in the gas preparation and compressed air drying techniques of pressure swing adsorption.

Attached to the end cap 14, and therefore adjacent the inlet 38, is a drain 44 which contains a reservoir 46 and an exhaust valve which is not shown but is located at the end indicated at 48 of drain 44.

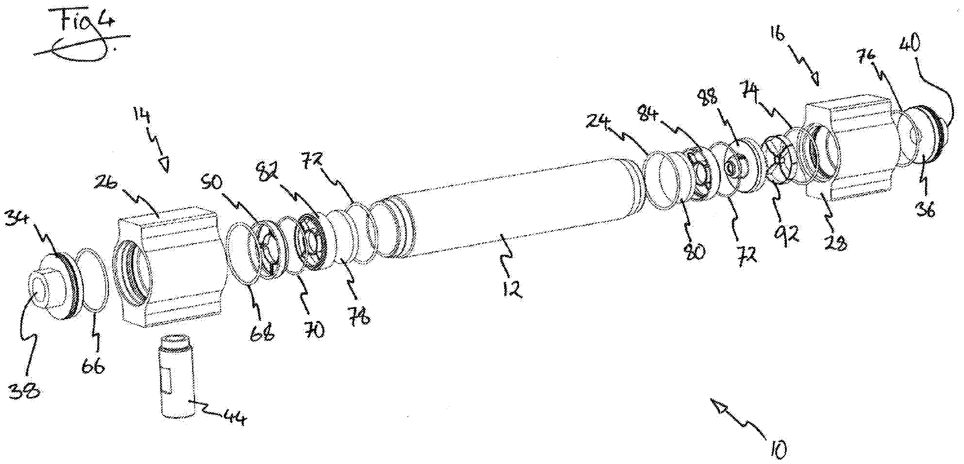

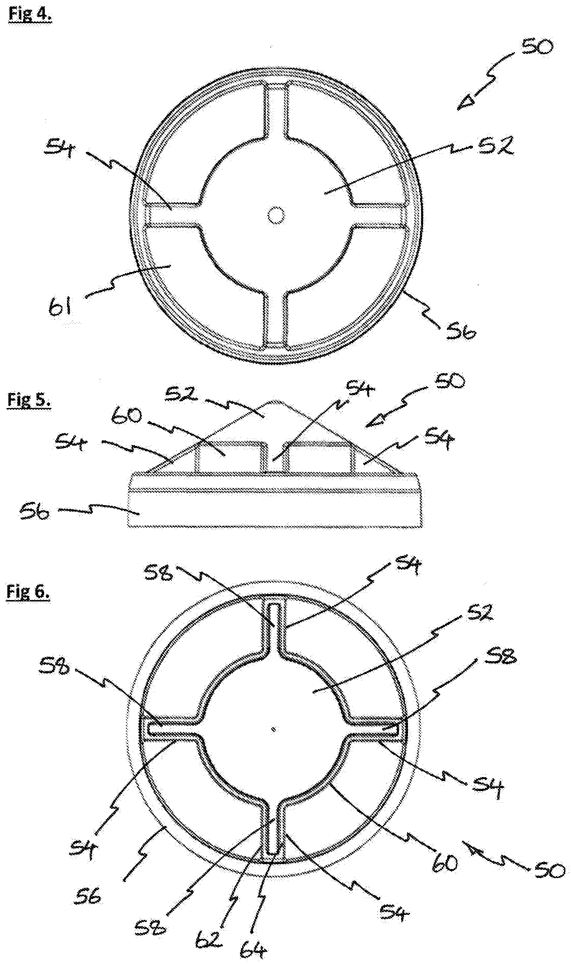

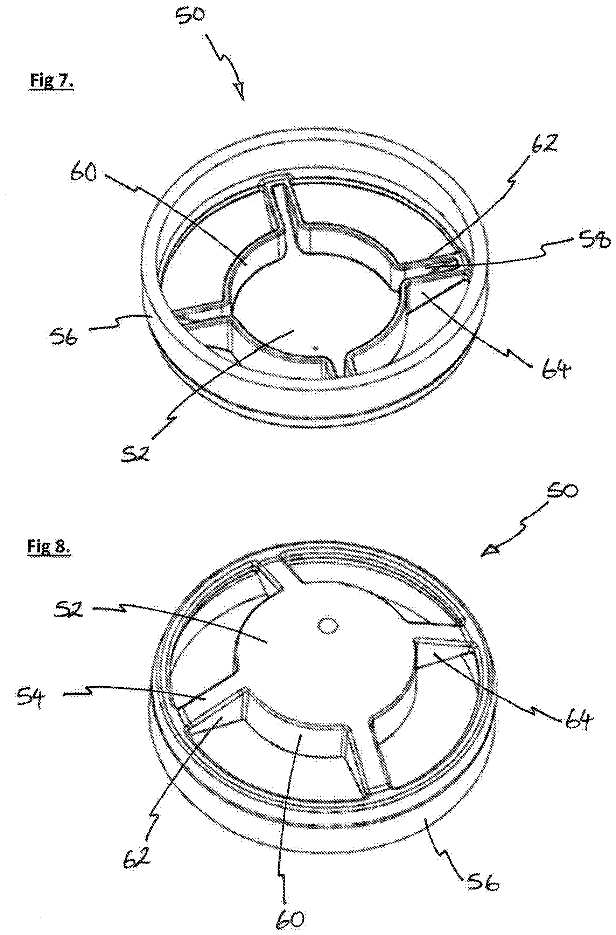

Also contained within the housing, specifically within the end cap 14 adjacent the inlet 38, is an insert 50, which is shown in more detail in figures 4 to 8. The insert 50 provides two functions of creating a substantially even flow of air across all of the tubes of desiccant material 42 and to capture droplets of condensed water entering through the inlet 38 before they reach the desiccant material 42.

The insert 50 includes a baffle 52 which is conical in shape and has its concave surface facing the inlet 38. A series of supports in the form of support legs 54 extend from the baffle 52 to an outer ring 56 thereby connecting the baffle 52 and the outer ring 56. At least one, and preferably each, of the support legs 54 has a channel 58 formed therein which connects the concave surface of the baffle 52 to the outer ring 56. Between the baffle 52 and the outer ring 56 is an annulus of space, indicated at 61, which is divided by the support legs 54 into segments through which the compressed air passes.

In the embodiment shown in figures 5 to 9 the baffle 52 is connected to the outer ring 56 by four support legs 54. However, it should be noted that other numbers of legs can be used and it is not necessarily the case that each leg must have a channel 58. However, the most preferred arrangement is to have six supporting legs each with a channel. This is preferable as only one, or perhaps two of the channels, that is the channels that extend vertically downwards or closest is vertically downwards, will carry water from the baffle 52 to the outer ring 56. By providing six support legs each with a channel the orientation of the insert 50 within the housing is not critical as there will always be at least one channel pointing in a substantially downwards direction allowing the water to drain under the force of gravity.

Other components contained within the apparatus 10 include further O-rings 66, 68, 70, 72, 74 and 76. At either end of the housing body 12 are filter pads 78 and 80 which are held in place by pad retainers 82 and 84. Contained within end cap body 28 is a non-return valve 86 which is formed from a valve body 88, a ball 90 and a ball retainer 92. The valve body 88 includes a purge orifice 94 formed in a sidewall adjacent the location of the ball 90. The non-return valve 86 operates in a manner familiar to person skilled in the art.

Operation of the apparatus 10 will now be described. A stream of compressed gas, for example compressed air, passes from an oil free (non-lubricated) compressor through an after-cooler and into inlet 38. Because the air has passed through and after cooler, droplets of water have condensed within the stream of compressed air and also enter the apparatus 10 through the inlet 38.

The insert 50 is located adjacent the inlet 38 and the direction of the flow of the stream of compressed air is interrupted by the baffle 52. The presence of the baffle 52 forces the stream of compressed air to experience turbulence as well as a radially outward movement resulting in the stream of compressed air passing through the part annular segments of space between the baffle 52, the outer ring 56 and the supports 54. The stream of compressed air continues to move axially along in the direction of the axis of the tubular body 12. As it passes the baffle 52, and in particular passes the tip of the baffle, the streams of compressed air, formed by the segments of space between the components of the insert 50, join together to form a single stream of compressed air having a substantially uniform velocity throughout its cross-section. As a result, as the stream of compressed air hits the tubes of desiccant material 42 the flow of air through each of the desiccant tubes is substantially the same. This even flow is important to ensure the efficient operation of the desiccant and therefore the consistent drying of the compressed air.

Returning to the insert 50 and in particular the baffle 52, as the stream of compressed air passes through the inlet 38 its velocity imparts momentum to the water droplets contained therein and this momentum prevents the vast majority of these droplets from changing direction with the remainder of the compressed air, as described above, and as a result the condensed water droplets impact on to the concave surface of the baffle 52. On initial impact these droplets are generally small and simply stick to the concave surface of the baffle 52. However, after a while the volume of water impacting the baffle surface becomes sufficiently high for small drops of water to form together having a sufficient mass that the force of gravity is able to overcome the surface tension that sticks the water droplets to the baffle surface thereby causing the droplets to move radially outwards (that is downwards) over the surface of the baffle.

Once the water droplet reaches the edge of the baffle 52 it either encounters the channel 58 of support leg 54 or it encounters a lip 60 which extends around the periphery of baffle 52, except for openings which run into the channels 58. The lip 60 directs the water droplets towards the lowermost channel 58. The water droplet is then able to run down the channel 58 between side walls 62 and 64 until it reaches the outer ring 56. At this point the action of the compressed air moving in a direction from the inlet to the outlet blows the droplet over the inner surface of ring 56 towards the drain 44. The water droplets then runs into the drain 44 where liquid water is collected in the reservoir 46. As a result of the inclusion of this simple insert the vast majority of the condensed water entering the apparatus is captured and directed to the drain 44. By using the desiccant tubes with polymer binder this desiccant material is not affected by the action of very small quantities of condensed water, in contrast to many other desiccant material such as desiccant beads.

The above process takes place during a drying cycle of the pressure swing adsorption apparatus 10 and the reservoir 44 is sized to comfortably hold all of the liquid water captured during the predetermined time span of the drying cycle. In order to enter the purge cycle, the action of the compressor closes down decompressing the apparatus and the valve in drain 44 is opened. At the same time, a predetermined volume of dried air is pumped back through the apparatus 10 from outlet 40 at reduced pressure. This is achieved by the ball 90 sitting in the valve body 88 and only allowing a small volume of air to pass through the purge orifice 94. This introduction of dry air at lower pressure causes the desorption of water from the desiccant material which is exhausted through the valve in drain 44 together with all of the liquid water that has gathered in reservoir 46 during the drying cycle. Once the purge cycle is complete the apparatus can switch back to a drying cycle as described above.

It will be appreciated by persons skilled in the art that the above embodiments have been described by way of example only and not in any limitative sense, and that various alterations and modifications are possible without departure from the scope of the protection which is defined by the appended claims. For example, the above apparatus has been described for use in the drying of compressed air. However, the same apparatus may be suitable for use in the drying of other compressed gases or for other treatments to compressed gases where water or other condensed liquids are present in the compressed gas. By way of a further example of an alternative, only one of the support legs 54 requires a channel 58 and this is particularly the case if an alignment means is provided to ensure that the leg 54 with the channel 58 extends vertically downwards when the apparatus 10 is in use. This could, for example, be by the inclusion of a protrusion on the outer surface of the outer ring 56 which fits into a recess or slot cut into the extruded end cap body 26. Furthermore, it will be apparent to person skilled in the art that this invention can be used in a single column drying device that feeds a compressed air storage tank and can equally be used in a continuous feed twin column drying device where one column operates in a drying mode whilst the other purges the recently adsorbed water from its desiccant material. The apparatus has been described as operating with an oil free (non-lubricated) compressor. However, the apparatus can also work with an oil lubricated compressor where an external oil removal filter is fitted.

## Claims

1. An apparatus (10) for use in the treatment of compressed gas, the apparatus (10) comprising:-
a housing (12) having at least one inlet (38) for allowing a stream of compressed gas into the housing (12) and at least one outlet (40) for allowing said stream of gas to exit said housing (12) ;
at least one drain (44) for collecting and exhausting at least one liquid component contained within said compressed gas;
at least one adsorbent material located in said housing (12) between said inlet (38) and said outlet (40) for absorbing at least one component of said stream of compressed gas; and
at least one insert (50), the insert (50) located within said housing (12) between said inlet (38) and said adsorbent material, the insert (50) comprising:-
a baffle (52) for interrupting the flow of a stream of compressed air passing from an inlet (38) in the housing (12) of the apparatus (10) for the treatment of compressed gas and causing the stream of compressed gas to change direction; and
a plurality of supports (54) extending from said baffle (52) to adjacent an internal surface of the housing (12) of the apparatus (10), at least one support (54) including a channel (58) to allow liquid deposited in said baffle (52) from said stream of gas to flow towards said internal surface,
wherein said baffle (52) is concave on a surface facing the inlet (38) of the apparatus (10).

2. An apparatus (10) according to claim 1, the insert further comprising
at least one ring member (56) and a plurality of said supports (54) extend from said baffle (52) to said ring (56).

3. An apparatus (10) according to any of the preceding claims, the insert further comprising six said supports (54).

4. An apparatus according to claim 1, wherein said housing (12) is tubular, and in use said housing (12) is arranged such that the longitudinal axis of the housing (12) is horizontal.

5. An apparatus (10) according to any of the preceding claims, wherein the baffle (52) includes a lip (60) which extends around the periphery of the baffle (52), except for openings which run into the channels (58).

6. An apparatus (10) according to any of the preceding claims, wherein the apparatus (10) includes alignment means to ensure that the channel (58) extends vertically downwards when the apparatus (10) is in use.

7. An apparatus (10) according to claim 6, wherein the alignment means comprises a protrusion on the outer surface of the ring (56) which fits into a recess or slot cut into an extruded end cap body (26).

8. An apparatus (10) according to any of the preceding claims, wherein the drain (44) contains a reservoir (46) and an exhaust valve.

9. An apparatus (10) according to any of the preceding claims, wherein the adsorbent material is a desiccant material (42) .

10. An apparatus (10) according to claim 9, wherein the desiccant material (42) is formed in tubes using a polymer binder.

11. An apparatus (10) according to claim 10, wherein the internal bores of the tubular desiccant material (42) extend coaxially with the housing (12).

## Patentansprüche

1. Vorrichtung (10) zur Verwendung bei der Behandlung von Druckgas, wobei die Vorrichtung (10) Folgendes aufweist:
ein Gehäuse (12) mit mindestens einem Einlass (38), der einen Druckgasstrom in das Gehäuse (12) strömen lässt, und mindestens einem Auslass (40), der den Druckgasstrom aus dem Gehäuse (12) ausströmen lässt;
mindestens einem Ablauf (44) zum Auffangen und Austragen mindestens eines in dem Druckgas enthaltenen flüssigen Bestandteils;
mindestens ein Adsorptionsmaterial, das sich zwischen dem Einlass (38) und dem Auslass (40) im Gehäuse (12) befindet, um mindestens einen Bestandteil des Druckgasstroms zu absorbieren; und
mindestens einen Einsatz (50), wobei sich der Einsatz (50) in dem Gehäuse (12) zwischen dem Einlass (38) und dem Adsorptionsmaterial befindet, wobei der Einsatz (50) Folgendes aufweist:
eine Ablenkplatte (52), um die Strömung eines Druckgasstroms von einem Einlass (38) in das Gehäuse (12) der Vorrichtung (10) zur Behandlung von Druckgas zu unterbrechen und den Druckgasstrom zur Richtungsänderung zu veranlassen; und
mehrere Stützstreben (54), die sich von der Ablenkplatte (52) aus bis zum Anliegen an einer Innenseite des Gehäuses (12) der Vorrichtung (10) erstrecken, wobei mindestens eine Stützstrebe (54) einen Kanal (58) umfasst, der in der Ablenkplatte (52) abgelagerte Flüssigkeit aus dem Druckgasstrom zur Innenseite strömen lässt,
wobei die Ablenkplatte (52) auf einer zum Einlass (38) der Vorrichtung (10) weisenden Seite konkav ist.

2. Vorrichtung (10) nach Anspruch 1, wobei der Einsatz weiterhin mindestens ein Ringelement (56) aufweist und sich mehrere der Stützstreben (54) von der Ablenkplatte (52) zu dem Ring (56) erstrecken.

3. Vorrichtung (10) nach einem der vorstehenden Ansprüche, wobei der Einsatz weiterhin sechs Stützstreben (54) aufweist.

4. Vorrichtung nach Anspruch 1, wobei das Gehäuse (12) rohrförmig ist und das Gehäuse (12) im Gebrauch so angeordnet ist, dass die Längsachse des Gehäuses (12) waagerecht verläuft.

5. Vorrichtung (10) nach einem der vorstehenden Ansprüche, wobei die Ablenkplatte (52) eine Lippe (60) umfasst, die sich mit Ausnahme von in den Kanal (58) mündenden Öffnungen um den Umfang der Ablenkplatte (52) erstreckt.

6. Vorrichtung (10) nach einem der vorstehenden Ansprüche, wobei die Vorrichtung (10) Ausrichteinrichtungen umfasst, um zu gewährleisten, dass der Kanal (58) senkrecht nach unten verläuft, wenn die Vorrichtung (10) in Gebrauch ist.

7. Vorrichtung (10) nach Anspruch 6, wobei die Ausrichteinrichtung einen Vorsprung auf der Außenseite des Rings (56) aufweist, der in eine Ausnehmung oder einen Schlitz passt, welche oder welcher in einen extrudierten Endkappenkörper (26) geschnitten sind.

8. Vorrichtung (10) nach einem der vorstehenden Ansprüche, wobei der Ablauf (44) einen Behälter (46) und ein Abgasventil enthält.

9. Vorrichtung (10) nach einem der vorstehenden Ansprüche, wobei das Adsorptionsmaterial ein Trocknungsmaterial (42) ist.

10. Vorrichtung (10) nach Anspruch 9, wobei das Trocknungsmaterial (42) mit einem Polymerbindemittel in Rohrform gebildet ist.

11. Vorrichtung (10) nach Anspruch 10, wobei die Innenbohrungen des rohrförmigen Trocknungsmaterials (42) koaxial mit dem Gehäuse (12) verlaufen.

## Revendications

1. Un appareil (10) destiné à être utilisé pour le traitement de gaz comprimé, l'appareil (10) comprenant :
un conteneur (12) comportant au moins une entrée (38) pour permettre un courant de gaz comprimé d'entrer dans le conteneur (12) et au moins une sortie (40) pour permettre audit courant de gaz de quitter ledit conteneur (12) ;
au moins un drain ou évacuation (44) pour collecter et évacuer au moins un composant liquide contenu dans ledit gaz comprimé ;
au moins un matériau adsorbant situé dans ledit conteneur (12) entre ladite entrée (38) et ladite sortie (40) pour adsorber au moins un composant dudit courant de gaz comprimé ; et au moins un insert (50), cet insert (50) étant placé à l'intérieur dudit conteneur (12) entre ladite entrée (38) et ledit matériau adsorbant, cet insert (50) comprenant :
un déflecteur (52) pour interrompre l'écoulement d'un courant d'air comprimé entrant par une entrée (38) dans le conteneur (12) de l'appareil (10) pour le traitement du gaz comprimé et provoquant le changement de direction du courant de gaz comprimé ; et
une pluralité de supports (54) s'étendant depuis ledit déflecteur (52) jusqu'à une position adjacente à une surface interne du conteneur (12) de l'appareil (10), au moins un support (54) comprenant un canal (58) pour permettre au liquide déposé sur ledit déflecteur (52) provenant dudit courant de gaz de s'écouler vers ladite surface interne,
dans lequel ledit déflecteur (52) est concave sur une surface faisant face à l'entrée (38) de l'appareil (10).

2. Un appareil (10) selon la revendication 1, l'insert comprenant en outre au moins un élément annulaire (56), et une pluralité desdits supports (54) s'étend depuis ledit déflecteur (52) jusque audit élément annulaire (56).

3. Un appareil (10) selon l'une quelconque des revendications précédentes, l'insert comprenant en outre six desdits supports (54).

4. Un appareil selon la revendication 1, dans lequel ledit conteneur (12) est de forme tubulaire, et dans lequel, en cours d'utilisation, ledit conteneur (12) soit agencé de telle sorte que l'axe longitudinal du conteneur (12) soit horizontal.

5. Un appareil (10) selon l'une quelconque des revendications précédentes, dans lequel le déflecteur (52) comprend une lèvre (60) qui s'étend autour de la périphérie du déflecteur (52), sauf à l'endroit des ouvertures qui débouchent dans les canaux (58).

6. Un appareil (10) selon l'une quelconque des revendications précédentes, dans lequel l'appareil (10) comprend des moyens d'alignement pours 'assurer que le canal (58) s'étend verticalement vers le bas lorsque l'appareil (10) est en cours d'utilisation.

7. Un appareil (10) selon la revendication 6, dans lequel les moyens d'alignement comprennent une saillie sur la surface externe de l'élément annulaire (56) qui s'insère dans un évidement ou une fente découpée dans un corps de bouchon de l'extrémité extrudée (26).

8. Un appareil (10) selon l'une quelconque des revendications précédentes, dans lequel le drain ou évacuation (44) comporte un réservoir (46) et une soupape d'échappement.

9. Un appareil (10) selon l'une quelconque des revendications précédentes, dans lequel le matériau adsorbant est un matériau déshydratant (42).

10. Un appareil (10) selon la revendication 9, dans lequel le matériau déshydratant (42) est sous forme de tubes grâce à l'emploi d'un liant polymère.

11. Un appareil (10) selon la revendication 10, dans lequel les alésages internes du matériau déshydratant tubulaire (42) s'étendent dans une direction coaxiale à celle dudit conteneur (12).
